# EUROPEAN PATENT APPLICATION

(11) **EP 4 707 098 A1**
(43) Date of publication of application: **11.03.2026**
(21) Application number: 24199291.6
(22) Date of filing: 09.09.2024
(51) Int. Cl.: B60W 30/02, B60W 30/18, B60W 50/00, B60K 28/16, B60W 40/06

(54) **PROACTIVE SLIPPERY ROAD DETECTION FOR SAFER ONE-PEDAL DRIVE**

(71) Applicant: Volvo Car Corporation, 405 31 Göteborg (SE)
(72) Inventor: Yasari, Ehsan, SE-405 31 Göteborg (SE); Bálint, András, SE-405 31 Göteborg (SE); Johansson, Staffan, SE-405 31 Göteborg (SE)
(74) Representative: Nederlandsch Octrooibureau

(57) **Abstract**

Method for controlling an actuator of a vehicle configured to operate in a standard mode, a low mode, and a special mode, or be deactivated, receive an actuator request, and control acceleration and deceleration of the vehicle based on the actuator request, wherein the deceleration is controlled by setting the actuator in one of the standard, low and special mode, or by deactivating the actuator, the method comprising obtaining first data indicative of a slippery condition of at least one of an upcoming road segment to be travelled by the vehicle or a current road segment being travelled by the vehicle; and based on the first data, switching the actuator from a previous setting to a current setting, wherein the previous and the current settings are different and comprise setting the actuator in one of the standard, low and special mode or deactivating the actuator.

## Description

### Technical Field

The current disclosure relates to a method and/or an apparatus for controlling an actuator of a vehicle.

### Background Art

One-pedal drive (OPD), also known as single-pedal function, is a relatively new technology applied in electric vehicles that allows decelerating vehicles or even bringing the vehicle to a complete stop without interacting with the brake pedal (which is often still present, to allow initiation of emergency braking by the driver, if needed, or to facilitate different driving scenarios and customer requests and expectations). OPD performs braking once the accelerator pedal is released.

Using the OPD may not limit the brake blending functionality, i.e., the distribution between friction brake utilization and recuperation. Limitless brake blending (allowing any distribution between friction brake and recuperation) is enabled by a brake-by-wire system. Having limitless possibilities for brake blending opens the door to further optimizing safety features, related to brake blending. One general limitation of OPD is that usually is designed to not generate the same level of braking performance as compared to the brake pedal as this could be detrimental, both from a comfort and safety perspective.

If the vehicle enters an area with low road friction and the OPD applies the deceleration obtained from disengaging the accelerator pedal (completely), this may provide a larger deceleration than expected by the driver, thus requiring the safety systems (i.e., Electronic Stability Control (ESC) and Traction Control System (TCS)) to intervene. To summarize, OPD does not provide all safety that would be possible by traditional braking but can cause safety issues by braking stronger in some situations than drivers would expect.

Additionally, it is also possible that while driving with OPD, the drivers accidentally lift their foot off the pedal (for example, making a sudden, unconscious movement due to spilling hot coffee). Doing so may also lead to safety-critical situations, especially if the road friction is low or is varying extensively at the given location.

### Summary

According to a first aspect, the disclosure comprises a method for controlling an actuator of a vehicle, the method being performed by a control unit of the vehicle, wherein the actuator is configured to:
- operate in a standard mode, a low mode, and a special mode, or be deactivated,
- receive an actuator request, and
- control acceleration and deceleration of the vehicle based on the actuator request, wherein the deceleration is controlled by setting the actuator in one of the standard mode, the low mode, the special mode, or by deactivating the actuator,
the method comprising:
- obtaining first data indicative of a slippery condition of at least one of an upcoming road segment to be travelled by the vehicle or a current road segment being travelled by the vehicle; and
- based on the first data, switching the actuator from a previous setting to a current setting, wherein the previous and the current settings are different and comprise setting the actuator in one of the standard mode, the low mode, and the special mode or deactivating the actuator.

In this way, critical locations are detected, and actions are proactively taken to avoid the safety-critical situation altogether. This allows to increase safety by adjusting the braking capacity of the actuator, which might be an OPD, when a slippery condition of an upcoming road segment to be travelled by the vehicle and/or of a current road segment being travelled by the vehicle is detected.

For instance, the first data may indicate a probability or risk of an upcoming road segment to be travelled by the vehicle or a current road segment being travelled by the vehicle being slippery and, if the assessed risk or probability is above a certain safe threshold, the method can either temporarily deactivate the actuator such that it is only configured to accelerate and not to decelerate, or adjust the braking power of the actuator to avoid instability when the actuator is operated.

The method may comprise switching the actuator from the previous setting having a first level of acceleration associated with the actuator request to the current setting having a second level of acceleration associated with the actuator request further comprises gradually changing the level of acceleration associated with the actuator request from the first level of acceleration to the second of acceleration.

The method may also comprise detecting that the vehicle has passed the current or upcoming road segment comprising the slippery condition and switching the actuatorto the previous setting.

The actuator may be switched from the previous setting to the current setting after a certain amount of time has passed from obtaining the first data.

The actuator may comprise a pedal that may be arranged to be gradually movable between a plurality of positions, wherein each position corresponds to a level of deceleration and wherein, for a determined position of the pedal the level of deceleration in each of the special mode, the low mode and the standard mode is different. This allows to increase safety by, for instance, operating the actuator in a mode wherein a level of deceleration associated with an actuator request is less or more than for another mode, thereby increasing stability of the vehicle when traveling over a slippery segment of the road. For instance, the pedal may be pivotably arranged to move between a plurality of positions based on a pressure exerted by a driver such that, when no pressure is exerted, the pedal is in an initial position among the plurality of positions and, by increasing the pressure on the pedal, the pedal moves down through the plurality of positions until reaching a final position among the plurality of positions. In a similar way, releasing pressure from the pedal causes the pedal to move up though the plurality of positions. The actuator request may be an increase or decrease of pressure causing the pedal to move from a current position to another position. The pedal may be configured such that each position has a level of associated deceleration which is different for each operating mode. For instance, when in the deactivated mode, the pedal may only accelerate when pressure is increased but not decelerate when pressure is decreased.

The actuator request may be a control signal generated by a processing unit. When the actuator is operating in each of the different modes, different actuator requests will have associated different deceleration levels. When the actuator switches from a previous setting associated to one of the modes to a current setting associated to another of the modes, the same actuator request will have different associated deceleration levels for the previous and current settings.

When switching the actuator from a previous setting having a previous value of deceleration associated with an actuator request to a current setting having a current value of deceleration associated with the same actuator request, the change from the previous to the current value of deceleration may be performed in a non-linear or linear manner.

For instance, an intermediate level of deceleration between the two levels of deceleration associated with two different operating modes of the actuator may be defined such that, when the actuator is set from one of the modes to the other, the level of deceleration associated with an actuator request is changed first from the level associated with the mode on which the actuator was operating to the intermediate level and, after that, from the intermediate level to the second level. In the same way, instead of one intermediate level, a plurality of intermediate levels may be used. The increase or decrease in deceleration levels when switching between two actuator modes may be performed in a linear or in a non-linear manner. This allows for a smoother behaviour of the vehicle, i.e. not switching from a deceleration level of 2 meters per second (m/s) associated to a determined deceleration request in a first mode to deceleration level of 0,1 m/s associated to the same determined deceleration request in a second mode very abruptly.

As a non-limiting example, if the actuator is operating in a first mode wherein a predetermined actuator request has associated a first deceleration level of 2 m/s and is switch to operate in a second mode wherein the same actuator request has associated a second deceleration level of 0,1 m/s, the method may comprise switching from the first deceleration level to an intermediate deceleration level of 1 m/s and then from the intermediate deceleration level of 1 m/s to the second level of 0,1 m/s. As said, a plurality of intermediate deceleration levels may be applied in a lineal or non-lineal manner. For instance, to switch from first to second modes with respective deceleration levels of 2 m/s and 1 m/s, the deceleration level may be switched from 2 m/s to 1,75 m/s, from 1,75 m/s to 1,5 m/s, from 1,5 m/s to 1,25 m/s and from 1,25 m/s to 1 m/s. This incremental change from 2m/s to 1 m/s can take place over a period of time, for instance over 1 second or 5 seconds.

Once a slippery condition is avoided and/or passed, the actuator may be switched back to the previous setting. This switching to the previous setting may occur after a certain period of time after the slippery condition is avoided and/or passed. For instance, the vehicle may switch the actuator from previous setting to current setting when a slippery condition is detected and return to the previous setting after detecting that the road region with the detected slippery condition is behind the vehicle. As said, the vehicle may wait a certain period of time, such as 5 seconds or any other suitable time, to switch the actuator back to the previous setting after detecting that the road segment containing the slippery condition is behind the vehicle.

Optionally, also switching the actuator from a previous setting to current setting might be performed with a certain delay. Any actuator switching, i.e. change of deceleration levels, might not be allowed during a deceleration or acceleration event. For instance, if an input from the driver or from a processing unit of the vehicle is received that modifies a speed of the vehicle, the method may comprise not allowing to switch the actuator. This may include also any event that changes the speed of the vehicle. Also switching the actuator after a certain event that modifies the speed of the vehicle may performed with a certain delay. For instance, the actuator may be switched 5 seconds after the event that has changed the speed of the vehicle is over.

Furthermore, in a case wherein a slippery zone is detected, a delay in switching the actuator may be applied not to degrade the driver perception. However, the actuator needs to be switched in advance before arriving to the slippery zone. After passing the slippery zone, the system is ready to switch back to the previous setting. As said, switching back the actuator to the previous setting may be performed after a certain amount of time has expired after the slippery zone has been passed.

Prior to initially switching the actuator, there might be a certain delay after the current acceleration event or deceleration event is finalized.

The first data may comprise an indication of a road friction coefficient and the current setting comprises setting the actuator in the special mode if:
- the first data indicates that the current road friction coefficient is less than or equal to a friction threshold, and/or
- the first data indicates that a difference between the current road friction coefficient and a previous road friction coefficient exceeds a variation threshold.

The first data may be received from at least one of a TCS, and a sensor. This is an efficient way of obtaining the first data. For instance, the TCS may be used for sensing slippery conditions when the vehicle is already on a slippery surface using the traditional technology and the remote sensor for sensing slippery conditions before the vehicle is on the slippery surface.

The remote sensor may comprise at least one of a camera, a lidar, and a radar. The sensor may include any other kind of suitable sensor.

Switching, based on the first data, the actuator from the previous setting to the current setting comprises detecting, based on the first data, the slippery condition using a Machine Learning (ML) algorithm or process, or some kind of rule-based determination.

The first data may comprise at least one of: a steering angle of the vehicle, a speed of the vehicle, a weight of the vehicle, design of a wheel of the vehicle, a tire tread depth of at least one wheel of the vehicle, a state of a road surface, a road curvature, a vehicle model and a tire tread of at least one wheel of the vehicle. This allows to increase stability of the vehicle as this data has an impact on said stability. The actuator may be set to one mode or the other depending on this data. For instance, when on a slippery road, higher speed means shorter time for stability intervention.

The method may comprise adjusting the level of deceleration associated with the standard mode, the low mode and/or the special mode based on the first data.

For instance, a combination of several parameters comprised in the first data can be used to adjust the level of deceleration associated with the standard mode, the low mode and/or the special mode based on the first data. For instance, the steering angle may be combined with the vehicle speed such that, when driving above a certain speed and/or in a curve, the actuator may be switched to a mode more sensitive compared to when driving slower and/or in a straight line. Other examples of parameters that may be used to adjust the level of deceleration may be slope of the road being travelled, tire pressure, type of propulsion of the vehicle, distance to other vehicles, lane position, etc.

The method may further comprise detecting a plurality of separated slippery zones on the upcoming road segment based on the first data and adjusting a steering direction of the vehicle based on the detected plurality of separated slippery zones.

For example, separated slippery zones could be several water puddles within the same lane, and adjusting the steering direction could be changing lane to avoid all identified water pools.

The first data indicative of the slippery condition of the upcoming road segment to be travelled by the vehicle may comprise at least one of: current weather data, traffic information, information received from another vehicle and information received from a road infrastructure. Also, the first data may comprise historical data. For example, if several slip-related accidents have occurred at a specific location (e.g., in a curve), that may result in increased probability estimates for slippery road conditions. The information may be received from other vehicles or infrastructure (i.e. Vehicle-to-vehicle communication (V2V) or Vehicle-to-infrastructure communication (V2I), or, in more general terms, what generally is referred to as Vehicle-to-X (anything), V2X) via connectivity functions, for instance well in time before the vehicle reaches the most dangerous or slippery locations of the road, providing thereby sufficient time for the driver or vehicle to take preventive action or performing such an action autonomously. The first data may be received from an external database or from any other source of information.

The method may further comprise detecting, using the first data, a location of a slippery zone on the road segment to be travelled by the vehicle or on the road segment currently being travelled by the vehicle.

The method may further comprise providing an alert message to a driver and/or a haptic warning to the driver of the vehicle before switching, based on the first data, the actuator from the previous setting to the current setting. The haptic warning may be provided through the steering wheel and/or a pedal and/or in any other suitable way.

The alert message may be displayed on a display unit of the vehicle and/or played from a loudspeaker as an audio warning.

According to another aspect, the disclosure comprises a control unit for a vehicle configured to perform the method according to any of the previous claims.

According to a further aspect, the disclosure comprises a vehicle comprising the control unit.

As said, the slippery condition may be detected using Machine Learning- and/or connectivity-based assessment of the road (both general conditions, like snow/ice, and conditions at specific locations like a large water puddle, oil patches, isolated icy spots, etc.) and the result is considered for the safest control of the actuator.

For instance, the method may allow to detect a slippery zone of the road, for instance, by Machine Learning-based methods (using analysis of e.g. images and sounds) or by receiving information from other vehicles having connectivity features (which may have made a potentially Machine Learning-based assessment themselves) that the vehicle is in or approaching an area or a specific location (like an oil patch) with slippery conditions. This allows various actions such as warning the driver, autonomously adjusting control of the actuator, which might be an OPD (e.g. setting it to low or off/deactivated state) or even suggesting or autonomously performing speed reduction/propulsion power reduction.

Upon detecting these slippery road spots and conditions, other safety functions or autonomous functions can proactively benefit from this. For example, vehicles can do small manoeuvres to avoid the separated slippery spots on the road. Alternatively, speed reduction could be considered (suggested to the driver or autonomously performed).

The present disclosure increases safety under slippery road conditions, by recognizing the presence of such conditions in real-time or in advance and taking an appropriate action. Drivers could manually adjust (e.g. disable) the actuator if they are aware of the situation (e.g. if they see ice/snow on the road) as well as adjusting to the best settings/modes for the actuator in such a situation. These settings can be automatically adjusted based on the road conditions and estimating the wheel slip.

The current disclosure may allow to perform the same actions using better strategies compared to state-of the-art, as well as addressing conditions that are changing or hard to anticipate/recognize by human drivers such as sudden changes in temperature and resulting slippery roads and/or oil patches or large water puddles. These general conditions or specific locations can be recognized by the Machine Learning-based system or having the information received from other vehicles or infrastructure (i.e. Vehicle-to-vehicle communication (V2V) or Vehicle-to-infrastructure communication (V2I), or, in more general terms, what generally is referred to as Vehicle-to-X (anything), V2X ) via connectivity functions well in time before the car reaches the most dangerous locations, providing thereby sufficient time for the driver to take preventive action or performing such an action autonomously.

Overall, vehicles equipped with the disclosed method provide a safer implementation of the actuator that dynamically, proactively, and autonomously addresses potentially risky road conditions without having to rely on a correct assessment of road conditions by the driver as well as the selection of an appropriate strategy to adjust to the conditions.

Additionally, when predicting and/or detecting possible safety-critical road condition, vehicle configuration may be improved to meet this. Both the electronic brake force distribution and the blending levels may be set to proactively meet the road conditions ahead.

### Brief Description of Drawings

Figure 1 illustrates a block diagram of a vehicle system according to the disclosure.
Figure 2 illustrates a flowchart schematically depicting a method for controlling an actuator of a vehicle according to the disclosure.
Figure 3 illustrates a flowchart schematically depicting a method for controlling a vehicle according to the disclosure.

### Description of Embodiments

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present disclosure, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, passenger cars, trucks, or buses etc. are examples of vehicles. The term "vehicle" also includes electric vehicle (EV) powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle, a battery electric vehicle (BEV), a plug-in electric vehicle (PEV), a hybrid electric vehicle (HEV), a hybrid plug-in electric vehicle (HPEV), a plug-in hybrid electric vehicle (PHEV), etc.

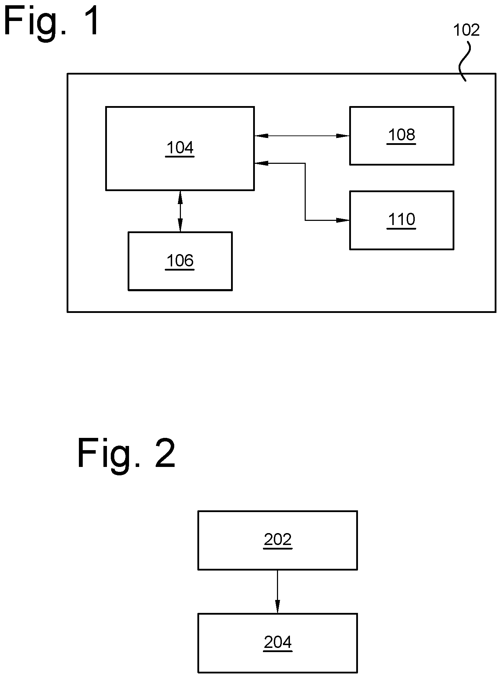

Figure 1 illustrates a block diagram of a vehicle system 102 according to the disclosure. The vehicle system 102 may comprise a control or processing unit 104, a memory 106, a sensor unit 108, and a communication unit 110. The control or processing unit 104 is connected to the memory 106, the sensor unit 108, and the communication unit 110. The communication unit 110 may transmit and receive information via Bluetooth, through a wireless communication network, for example, a 4G network, and/or using any other suitable communication technology.

The vehicle system 102 may comprise further an actuator configured to receive an actuator request and to control acceleration and deceleration of the vehicle based on the actuator request. The actuator may be configured to operate in a standard mode, a low mode and a special mode and/or to operate in a deactivated mode. A level of deceleration associated with the actuator request may be dependent on which mode the actuator is operated in. The level of deceleration associated with the actuator request may be zero when the actuator is operated in the deactivated mode such that the actuator can only accelerate the vehicle. The vehicle may comprise further a brake pedal or any other kind of system that may be used to brake the vehicle when the actuator is in the deactivated mode. The actuator request may be received form the control unit 104. The level of deceleration associated with the actuator requests for the different operating modes of the actuator may be stored in the memory 106.

Figure 2 illustrates a flowchart schematically depicting a method for controlling an actuator of a vehicle according to the disclosure. The method of Figure 2 may be performed by the vehicle system 102, particularly by the control or processing unit 104, of Figure 1.

In step 202, the method comprises obtaining first data indicative of a slippery condition of at least one of an upcoming road segment to be travelled by the vehicle or a current road segment being travelled by the vehicle.

After step 202, the method proceeds to step 204 comprising, based on the first data, switching the actuator from a previous setting to a current setting, wherein the previous and the current settings are different and comprise setting the actuator in one of the standard mode, the low mode, and the special mode or deactivating the actuator.

The actuator may comprise a pedal that may be arranged to be gradually movable between a plurality of positions, wherein each position corresponds to a level of deceleration and wherein, for a determined position of the pedal the level of deceleration in each of the special mode, the low mode and the standard mode is different.

As a non-limiting example, the pedal may be pivotably arranged to move between a plurality of positions based on a pressure exerted by a driver such that, when no pressure is exerted, the pedal is in an initial position among the plurality of positions and, by increasing the pressure on the pedal, the pedal moves down through the plurality of positions until reaching a final position among the plurality of positions. In a similar way, releasing pressure from the pedal causes the pedal to move up though the plurality of positions. The actuator request may be an increase or decrease of pressure causing the pedal to move from a current position to another position. The pedal may be configured such that each position has a level of associated deceleration which is different for each operating mode. For instance, when in the deactivated mode, the pedal may only accelerate when pressure is increased but not decelerate when pressure is decreased.

The first data received in step 202 may comprise an indication of a road friction coefficient. The control unit 104 may set the actuator to the special mode if the first data indicates that the current road friction coefficient is less than or equal to a friction threshold, the first data indicates that a difference between the current road friction coefficient and a previous road friction coefficient exceeds a variation threshold.

Furthermore, the first data may be received in step 202 from at least one of a TCS, and a sensor which might be part of the sensor unit 108. The remote sensor may comprise at least one of a camera, a lidar and a radar. The remote sensor may include any other kind of suitable sensor.

In step 204, switching, based on the first data, the actuator from a previous setting to a current setting may comprise detecting, based on the first data, the slippery condition using a Machine Learning algorithm or process or some kind of rule-based determination.

Also, the first data received in step 202 may comprise at least one of a steering angle of the vehicle, a speed of the vehicle, a weight of the vehicle, design of a wheel of the vehicle, a tire tread depth of the wheel of the vehicle, a road surface state, a road curvature, a vehicle model, and a tire tread of the wheel of the vehicle. The actuator may be switch in step 204 to one mode or the other depending on this data.

The method may comprise a further step (not shown in Fig. 2) of adjusting the level of deceleration associated with the standard mode based on the first data.

Also, the method may comprise detecting a plurality of separated slippery zones on the upcoming road segment based on the first data and adjusting a steering direction of the vehicle based on the detected plurality of separated slippery zones.

The first data received in step 202 and indicative of the slippery condition of the upcoming road segment to be travelled by the vehicle may comprise at least one of current weather data, traffic information, information received from another vehicle and information received from a road infrastructure. Also, said first data may comprise historical data. For example, if several accidents related to road conditions have happened at a specific location (e.g., in a curve), that may result in increased probability estimates for slippery road conditions at that location. The first data or part of the first data may be received from other vehicles or infrastructure (V2V, V2I or V2X) via connectivity functions.

The method of Fig. 2 may comprise detecting, using the first data received in step 202, a location of a slippery zone on the road segment to be travelled by the vehicle or on the road segment currently being travelled by the vehicle.

The method of Fig. 2 may also comprise a step of providing an alert message to a driver and/or a haptic warning to the driver of the vehicle before switching the actuator in step 202. The alert message may be displayed on a display unit of the vehicle and/or played from a loudspeaker as an audio warning.

As explained, the method of Fig. 2 may use remote sensing sensors (e.g., cameras, radar, Lidar, etc.), and deep neural network (e.g., such as convolutional network) or other Machine Learning methods (supervised or unsupervised learning, federated learning, regression, classification) to detect slippery road areas, either when these areas are separated or when the overall road condition is slippery. The method of Fig. 2 may be proactive and benefits from remote sensing of the road.

The method of Fig. 2 may combine remote information with estimated/calculated wheel slip in the risk assessment and decision making of step 204. In an alternative action in the case of separated slippery areas (e.g., oil patches, ice spots, etc.), by early identifying these locations, the vehicle may perform small manoeuvrings to avoid these spots.

Vehicles that have the connectivity features can communicate about identified slippery/risky areas to other vehicles directly or via a central infrastructure well in time before other vehicles reach that location.
The present disclosure allows using a proactive and predictive setup and datasets of the intended vehicle path for controlling the vehicle parameters and setting the actuator. For instance, by using remote sensing devices, weather data, Global Positioning System (GPS) with planned routing, Machine Learning (ML) algorithm etc. In this way, a multi-objective optimization setup may be provided for enhancing brake functions such as Electronic Brake Distribution (EBD), setting actuator modes/settings to enhance safety aspects. Also, the method allows to avoid dangerous patches of road by manoeuvring.

As an example, in a vehicle with a One Pedal Drive actuator, as soon as the driver lifts their foot from the acceleration pedal or OPD, the vehicle will brake by approximately 20% of its maximum braking capacity. This deceleration on slippery roads could potentially increase instability and challenge the driver which can lead to safety-critical situations. This disclosure addresses this issue.

The method of Fig. 2 may also consider or comprise the following:
- Sensors to confirm the status of the One Pedal Driving.
- Remote sensing sensors (e.g. camera, lidar, radar, infrared, etc.) to scan the road surface remotely.
- Component that uses weather information data.
- Deep Neural Network or other Machine Learning Algorithms or processes configured to remotely detect a slippery road condition (e.g., greasy surface, icy, snowy area, or water puddle on the road, etc.) from the sensors data collected.
- Besides sensor data, the first data may also include historical data as a parameter used as input to the Machine Learning model. For example, if several slip-related accidents have happened at a specific location (e.g., in a curve), that may result in increased probability estimates for slippery road conditions at that location.
- Car connectivity feature that can share this information directly or via central infrastructure to vehicles that could potentially benefit from this feature or receive such information from other cars or from road infrastructure with connectivity features. (V2V, V2I or/and V2X communication)
- Component and algorithm/process to make an estimation of the location of the slippery surfaces (in case there are separated) on the road (e.g. exact GPS location) as well as when the car will reach that location based on parameters like speed, traffic situation, etc.
- System for sensing slippery conditions when the car is already on a slippery surface using the traditional technology (e.g. TCS). This system is henceforth referred to as a passive system.
- Proactive system that remotely estimates the friction level on identified separated slippery areas.
- Component that calculates and estimates the wheel slip based on the collected data from remote sensing sensors and the passive and proactive system, and different factors such as speed, weight, tire design and depth, tread, etc. and checks if wheel slip is/can become above a safety threshold if the actuator or OPD releases.
- The method allows to perform multi-objective optimization in regard to using different control strategies based on input. To exemplify this, the settings for Electronic Brake Distribution (EBD) shall be different when steering angle is larger than zero (whilst turning) compared to if steering angle is zero or close to zero (whilst driving in a straight line).
   ∘ This multi objective optimization is here not limited to merely taking steering angle as input and EBD settings as output but is applicable to all parameters quantified in the vehicle (including OPD mode) as well as all parameters previously mentioned (including road surface state, road curvature, vehicle speed, weight, tire tread pattern, information from remote sensing sensors etc.).
   ∘ This multi objective optimization both works on current data and on road conditions in the future path of the vehicle.
- The method of Fig. 2 can adjust/deactivate the braking power on the actuator, for instance the one pedal drive, either permanently or temporarily at the identified spots on the road if the estimation of slip is above safety threshold or on other necessary scenarios.
- The method of Fig. 2 can do small manoeuvrings in the case of identified slippery separated spots on the road.
- The method of Fig. 2 can provide a warning light to inform the driver about the road condition or status of the one pedal drive.
- The method of Fig. 2 can alter the blending state proactively in order to enhance brake performance and safety.

### Separated slippery areas on the road:

In one scenario, based on the first data received in step 202 comprising information collected from remote sensing sensors and other components described earlier including the ML algorithm, the vehicle can detect slippery road conditions and its exact GPS location and the time when the vehicle will reach there. Examples of separated slippery road conditions are water puddles, icy isolated spots on the road, an oil patch, a greasy spot on the road, etc. The vehicle could potentially temporarily deactivate the OPD feature exactly on the location or at a predefined distance before the location where the slippery condition is identified, and the timing is calculated. In this case lifting the acceleration pedal on those locations will not cause any unnecessary extra slip on the wheel due to the reduced braking power. In another embodiment, the braking power from releasing the acceleration pedal can be adjusted based on the estimated friction level so that slip of wheels does not exceed a safety threshold. Additionally, the EBD levels are calibrated as well as the brake blending levels are set to optimal level to meet this road condition. Additionally, the multi objective control strategy may be utilized to ensure the most optimal vehicle state. As one output of the multi objective control strategy, the propulsion torque for the vehicle may be reduced if road conditions are or are predicted to be slippery.

### Overall road condition is slippery (not only a separated area)

In another embodiment, the vehicle could either use the traditional system (e.g. comparing wheel speed on all wheels as used in TCS) to detect slippery conditions, or as described above use remote sensing sensors to check the general road conditions, or a combination of these methods. If the wheel slip is or can become above a certain threshold, herein generally referred to as wheel slip threshold, when the acceleration pedal releases, the system can inform the driver about the condition, or deactivate the OPD feature or adjust the OPD mode so that the wheel slip remains in the safe range. Same procedure for EBD, brake blending and multi objective control strategy as mentioned in the paragraph above is also applicable for this case.

In all these scenarios the vehicle could potentially share this information via a connectivity solution either directly or via a central infrastructure to other cars that can benefit from this information, as well as benefit from information received via connectivity features as an additional input in decision-making.

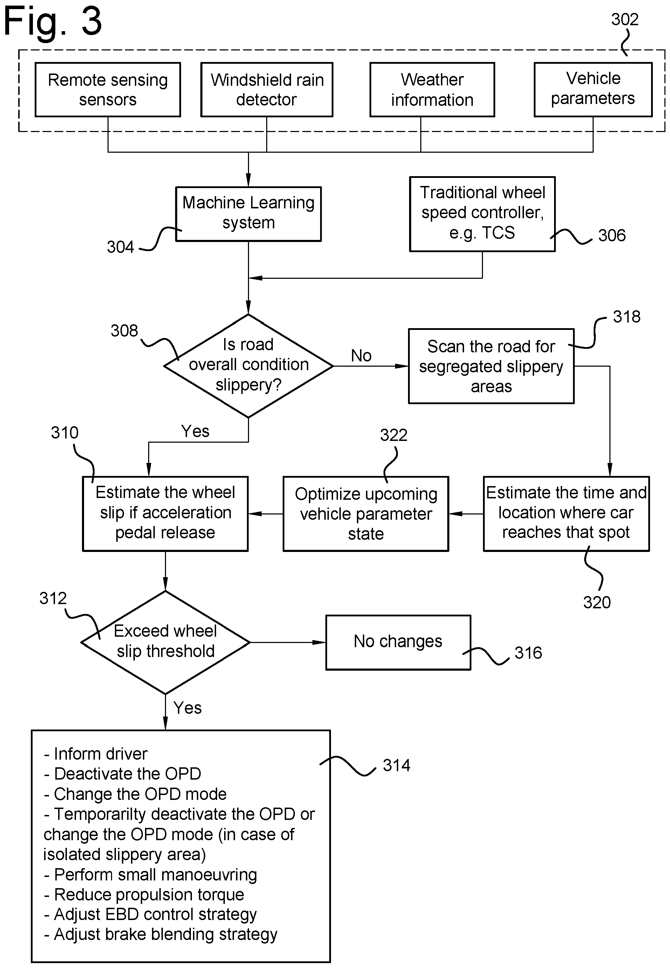

Fig. 3 shows a flowchart of a method for controlling a vehicle.

In step 302, the data from remote sensing sensors, the windshield rain detector, weather information and/or information about other vehicle parameters is received. In step 304, a Machine Learning system processes the information received in step 302 to detect slippery areas on the road. Furthermore, in step 306, further information from the TCS is received. In step 308, the method of Fig. 3 detects whether the overall condition of the road is slippery. If step 308 detects that the overall condition of the road is slippery, the method proceeds to step 310 and estimates the wheel slip if the actuator (for instance the OPD) is released. If said estimated wheel slip exceeds a wheel slip threshold in step 312, the method proceeds to step 314 whether several actions or a combination of them may be performed, such as informing the driver, switching the actuator from a previous setting to a current setting as previously described, which may be done for a predetermined period depending on whether the road comprises several isolated slippery areas, performing small manoeuvrings, reducing propulsion torque, adjusting the EBD control strategy, and/or the blending strategy.

If in step 312, the wheel slip threshold is not exceeded, the method proceeds to step 316 and nothing is changed. If in step 308, the road is not considered as overall slippery, the method proceeds to step 318 wherein the road is scanned for separated slippery areas, after that to step 320 wherein an estimation is performed of the time and location where the vehicle reaches the separated slippery areas (spots), to step 322 wherein the method optimizes upcoming parameter state and this information will be used by step 310 to estimate the wheel slip if the actuator is released. In an embodiment, the method in step 312 may also consider a road coefficient variation such that, if in step 312 the wheel slip threshold and/or the road coefficient variation threshold are not exceeded, the method may proceed to step 316.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate devices. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiments disclosed, but that the disclosure will include all embodiments falling within the scope of the appended claims.

## Claims

1. A computer implemented method for controlling an actuator of a vehicle, the method being performed by a control unit (104) of the vehicle, wherein the actuator is configured to:
- operate in a standard mode, a low mode, and a special mode, or be deactivated,
- receive an actuator request, and
- control acceleration and deceleration of the vehicle based on the actuator request, wherein the deceleration is controlled by setting the actuator in one of the standard mode, the low mode, the special mode, or by deactivating the actuator,
the method comprising:
- obtaining (202) first data indicative of a slippery condition of at least one of an upcoming road segment to be travelled by the vehicle or a current road segment being travelled by the vehicle; and
- based on the first data, switching (204) the actuator from a previous setting to a current setting, wherein the previous and the current settings are different and comprise setting the actuator in one of the standard mode, the low mode, and the special mode or deactivating the actuator.

2. The method according to claim 1, wherein, switching (204) the actuator from the previous setting having a first level of acceleration associated with the actuator request to the current setting having a second level of acceleration associated with the actuator request further comprises gradually changing the level of acceleration associated with the actuator request from the first level of acceleration to the second of acceleration.

3. The method according to claim 1 or 2, further comprising, detecting that the vehicle has passed the current or upcoming road segment comprising the slippery condition, and switching the actuator to the previous setting.

4. The method according to claim 1, wherein the actuator is switched from the previous setting to the current setting after a certain amount of time has passed from obtaining (202) the first data.

5. The method according to claim 1, wherein the actuator is a pedal arranged to be gradually movable between a plurality of positions, wherein each position corresponds to a level of deceleration and wherein, for a determined position of the pedal the level of deceleration in each of the special mode, the low mode and the standard mode is different.

6. The method according to any of the previous claims, wherein the first data comprises an indication of a road friction coefficient and the current setting comprises setting the actuator in the special mode if:
- the first data indicates that the current road friction coefficient is less than or equal to a friction threshold, and/or
- the first data indicates that a difference between the current road friction coefficient and a previous road friction coefficient exceeds a variation threshold.

7. The method according to any of the previous claims, wherein, based on the first data, switching (204), the actuator from the previous setting to the current setting comprises detecting, based on the first data, the slippery condition using a Machine Learning process.

8. The method according to any of the previous claims, wherein the first data comprises at least one of: a steering angle of the vehicle, a speed of the vehicle, a weight of the vehicle, design of a wheel of the vehicle, a tire tread depth of at least one wheel of the vehicle, a state of a road surface, a road curvature, a vehicle model and a tire tread of at least one wheel of the vehicle.

9. The method according to any of the previous claims, further comprising adjusting the level of deceleration associated with the standard mode, the low mode, and/or the special mode based on the first data.

10. The method according to any of the previous claims, further comprising detecting a plurality of separated slippery zones on the upcoming road segment based on the first data and adjusting a steering direction of the vehicle based on the detected plurality of separated slippery zones.

11. The method according to any of the previous claims, wherein the first data indicative of the slippery condition of the upcoming road segment to be travelled by the vehicle comprises at least one of: current weather data, traffic information, information received from another vehicle and information received from a road infrastructure.

12. The method according to any of the previous claims further comprising, based on the first data, detecting a location of a slippery zone on the road segment to be travelled by the vehicle or on the road segment currently being travelled by the vehicle.

13. The method according to any of the previous claims, further comprising providing an alert message to a driver and/or a haptic warning to the driver of the vehicle before switching (204), based on the first data, the actuator from the previous setting to the current setting.

14. A control unit (104) for a vehicle configured to perform the method according to any of the previous claims.

15. A vehicle comprising the control unit (104) according to claim 14.
